# EUROPÄISCHE PATENTANMELDUNG

(11) **EP 1 580 339 A2**
(43) Veröffentlichungstag der Anmeldung: **28.09.2005**
(21) Anmeldenummer: 05101565.9
(22) Anmeldetag: 01.03.2005
(51) Int. Cl.: E03F 5/14

(54) **Abwasseranlage und Verfahren zum Betätigen eines Stauelements einer Abwasseranlage**

(30) Priorität: 26.03.2004 DE 102004014762
(71) Anmelder: Hans Huber AG Maschinen- und Anlagenbau, D-92334 Berching (DE)
(72) Erfinder: Gelhaus, Christian, 81373 München (DE); Frommann, Christian, 92318 Neumarkt (DE); Spenger, Franz, 91189 Röttenbach (DE)
(74) Vertreter: Bergmeier, Werner

(57) **Zusammenfassung**

Eine Abwasseranlage mit einer Zuflussseite (7) für verunreinigtes Wasser und einer Abflussseite (8) für gereinigtes Wasser weist eine Tauchwand (2) auf der Zuflussseite (7) und eine Zwischenwand (1) zur Abtrennung der Zuflussseite (7) von der Abflussseite (8) auf, wobei zwischen der Tauchwand (2) und der Zwischenwand (1) eine Siebanlage mit einer Schneckenwendel (3) und einem die Schneckenwendel (3) teilweise umgebenden Sieb (4) angeordnet ist. In Verlängerung der Zwischenwand (1) ist ein Stauelement (8) angeordnet, dessen wirksame Staufläche veränderbar ausgebildet ist und das zumindest in seiner größten Erstreckung bis über die Schneckenwendel (3) und das Sieb (4) hinausragt.

## Beschreibung

Die vorliegende Erfindung betrifft eine Abwasseranlage mit einer Zuflussseite für verunreinigtes Wasser und eine Abflussseite für gereinigtes Wasser, mit einer Tauchwand auf der Zuflussseite und einer Zwischenwand zur Abtrennung der Zuflussseite von der Abflussseite, wobei zwischen der Tauchwand und der Zwischenwand eine Siebanlage mit einer Schneckenwendel und einem die Schneckenwendel teilweise umgebenden Sieb angeordnet ist. Weiterhin betrifft die Erfindung ein Verfahren zum Betätigen eines Stauelementes einer Abwasseranlage zwischen einer Zuflussseite für verunreinigtes Wasser und einer Abflussseite für gereinigtes Wasser, wobei die wirksame Höhe des Stauelementes in Abhängigkeit der Menge des anfallenden Wassers gesteuert wird.

Aus der EP 0 614 397 B1 ist eine Abwasseranlage mit eingebauter Siebrecheneinheit bekannt. Zwischen einer Zuflussseite und einer Abflussseite ist eine Zwischenwand vorgesehen, auf der eine Reinigungsvorrichtung in Form eines Siebrechens angeordnet ist. Zur Erhöhung des Stauvolumens befindet sich in Fließrichtung hinter dem Siebrechen ein zur Vertikalebene geneigtes Stauelement. Mit diesem Stauelement wird die Durchtrittsgeschwindigkeit sowie die Druckverteilung des Wassers bezüglich des Siebrechens vergleichmäßigt. Die offenbarte Vorrichtung hat den Nachteil, dass insbesondere Schweb- und Sinkstoffe, wie z.B. Sand, das geneigt ausgebildete Stauelement nicht überwinden können. Insbesondere nach großen Regenereignissen sammeln sich dort Verunreinigungen und führen zu einem erhöhten Verschleiss zwischen Siebrechen und Rechenreiniger.

Aus der DE 33 05 409 A1 ist ein Regenabschlagwerk zur Trennung von Schmutz- und Regenwasser mit einem zwischen Kanal und Kläranlage angeordneten Stauraum, in dem eine Tauchwand einen abschlagseitigen Raum abteilt, bekannt. Zwischen der Unterkante der Tauchwand und der Wandung des Stauraums ist ein Grobfilter angeordnet. Über einen in dem kanalseitigen Stauraum angeordneten Schwimmer ist über einen Waagebalken, dessen Drehachse oberhalb der Tauchwand liegt, eine Klappe verbunden, welche als Stauelement dient. In Abhängigkeit des Wasserstandes wird die wirksame Höhe des Stauelements beeinflusst, indem das Stauelement um eine Drehachse abgesenkt oder angehoben wird. Nachteilig ist hierbei, dass der Grobfilter keine Reinigungseinrichtung aufweist und somit für Inspektionszwecke schwer zugänglich ist. Auch bei vollständig geöffnetem Stauelement ist der Grobfilter unterhalb des Wasserspiegels und somit nicht zugänglich.

Aufgabe der vorliegenden Erfindung ist es daher, eine Anlage und ein Verfahren zu schaffen, mit welchen einerseits der Wasserstand in einem Becken steuerbar ist und andererseits eine Siebeinrichtung, welche Schmutz aus dem Abwasser filtert, zu Wartungszwecken leicht zugänglich ist.

Die Aufgabe wird gelöst mit einer Abwasseranlage und einem Verfahren der unabhängigen Ansprüche.

Die erfindungsgemäße Abwasseranlage weist eine Zuflussseite für verunreinigtes Wasser und eine Abflussseite für gereinigtes Wasser auf. Auf der Zuflussseite ist eine Tauchwand angeordnet. Die Zuflussseite und die Abflussseite sind mittels einer Zwischenwand voneinander getrennt. Zwischen der Tauchwand und der Zwischenwand ist eine Siebanlage mit einer Schnekkenwendel und ein die Schneckenwendel teilweise umgebendes Sieb angeordnet. Auf der Verlängerung der Zwischenwand ist ein Stauelement angeordnet, dessen wirksame Staufläche veränderbar ausgebildet ist und das zumindest in seiner größten Erstreckung über die Schneckenwendel und das Sieb hinausragt.

Durch die veränderbare Staufläche des Stauelementes wird vorteilhafterweise bewirkt, dass eine Regulierung des Wasserstandes auf der Zuflussseite ermöglicht wird. Bei einer großen Wassermenge auf der Zuflussseite wird die wirksame Staufläche des Stauelementes verringert, so dass mehr Wasser abfließen kann und das Wasserniveau auf der Zuflussseite insgesamt etwa gleich bleibt. Das Wasser, welches von der Zuflussseite in die Abflussseite gelangt, durchströmt hierbei die Siebanlage mit der Schneckenwendel und dem Sieb. Verunreinigungen bleiben in dem Sieb hängen und werden mit Hilfe der sich drehenden Schneckenwendel an das Ende der Schneckenwendel befördert und können dort aus der Abwasseranlage entnommen werden. Die wirksame Staufläche, d. h. die Projektion des Stauelementes auf das rückgestaute Wasser, beeinflusst dabei die Höhe des rückgestauten Wasserspiegels. Das Wasser, welches insbesondere von unten durch die Siebanlage hindurchtritt, vergrößert seine Fließgeschwindigkeit in Abhängigkeit davon, wie viel Wasser durch das wehrartige Stauelement freigegeben wird. Erstreckt sich das Stauelement zumindest in seiner größten wirksamen Staufläche bis über die Schneckenwendel und das Sieb hinaus, so wird vorteilhafterweise bewirkt, dass das komplette Sieb durchströmt wird und somit eine sehr gute Reinigungswirkung und ein sehr guter Abtransport der Verunreinigungen möglich wird.

Besonders vorteilhaft ist es, wenn die wirksame Staufläche in ihrer Höhe veränderbar ausgebildet ist. Hierdurch wird die Unterkante des Stauelementes entweder angehoben oder die Oberkante des Stauelementes abgesenkt. Das aufgestaute Wasser über- oder unterströmt damit das Stauelement und sorgt auf der gesamten Länge des Stauelementes für eine gleichmäßige Strömung durch die Siebanlage. Die Reinigung des Abwassers wird damit schnell und gleichmäßig bewirkt. Eine stark ungleichmäßige Ansammlung von Verunreinigungen in der Siebanlage kann ebenfalls vermieden werden.

Vorteilhaft ist es, wenn das Stauelement um eine horizontale und vertikale Achse schwenkbar gelagert ist. Bei der Lagerung um eine horizontale Achse wird das Stauelement derart verschwenkt, dass das von der Achse abgewandte Stauelement sich in der Projektion zur rückstauenden Wasserfläche der Achse nähert und hierdurch die wirksame Staufläche verringert wird. Bei einem Zurückschwenken wird die wirksame Staufläche wiederum vergrößert und bewirkt somit eine größere Rückstauwirkung als zuvor. Bei der Lagerung um eine vertikale Achse werden die Seiten des Stauelementes verschwenkt. Auch hierdurch wird die wirksame Staufläche bzgl. des rückgestauten Wassers verändert, wodurch Wasser zurückgehalten oder mehr oder weniger schnell abgelassen werden kann.

In einer weiteren vorteilhaften Ausführung ist das Stauelement vertikal verschieblich gelagert. Im Gegensatz zu einer Verschwenkung des Stauelementes wird hierbei das Stauelement nach unten oder oben verschoben und hierdurch die Rückstaukante des Stauelementes in seiner Position verändert. Gegenüber einer geschlossenen Stellung wird dabei das Stauelement entweder angehoben, wodurch sich ein Spalt zwischen der abgesenkten Position und der angehobenen Position bildet, durch welche das Wasser in die Abflussseite einströmen kann, oder das Stauelement wird abgesenkt, wodurch die obere Staukante mehr oder weniger unter den Wasserspiegel gelangt und hierdurch jedenfalls das Einströmen des Wassers in die Abflussseite mehr oder weniger erlaubt.

Besonders vorteilhaft ist das Stauelement an der Zwischenwand anzuordnen. Die Zwischenwand ist üblicherweise so stabil aufgebaut, dass sie das Stauelement, dessen Lagerung und insbesondere die Kräfte beim Rückstauen des Wassers aufnehmen kann.

Ist das Stauelement an der Siebanlage angeordnet, so ist es in vorteilhafterweise besonders einfach zu montieren. Es kann bereits zusammen mit der Siebanlage vormontiert und zur Baustelle gebracht werden und dort in sehr kurzer Zeit beispielsweise an die Zwischenwand angebaut werden.

Die Tauchwand dient zur Wasserleitung, wodurch das Wasser gezwungen wird auf dem Weg von der Zuflussseite zur Abflussseite durch die Siebanlage hindurch zu strömen. Auf die Tauchwand entstehen üblicherweise keine großen Kräfte, so dass sie sehr einfach an einem Gehäuse der Siebanlage angeordnet sein kann. Häufig ist es auch ausreichend, dass die Tauchwand ein Blech, insbesondere ein Edelstahlblech ist, welches mit dem Gehäuse der Siebanlage verbunden ist. Die Tauchwand ragt dabei bis oberhalb des Wasserspiegels, so dass die Strömung durch die Siebanlage gewährleistet ist.

Umgibt das Sieb die Schneckenwendel im wesentlichen in ihrer oberen Hälfte, so wird das fließende Wasser mit den Verunreinigungen an der Schnekkenwendel vorbei und schließlich durch das Sieb hindurch geleitet. Die Verunreinigungen bleiben an dem Sieb im Bereich der Schneckenwendel hängen und können bei einer Bewegung der Schneckenwendel an das Ende der Schneckenwendel hin befördert werden. Wichtig ist die Durchströmung der Siebanlage im wesentlichen von unten nach oben.

Erfindungsgemäß ragt das Stauelement in seiner größten Erstreckung bis über die Schneckenwendel und das Sieb hinaus. Besonders vorteilhaft ist es, wenn zusätzlich die Zwischenwand bis im wesentlichen zu der Höhe der Achse der Schneckenwendel reicht und im Anschluss daran das Stauelement beginnt. Das Stauelement wirkt hierdurch etwa ab der Höhe der Achse der Schneckenwendel im Bereich des Siebes. Eine Reinigung des Raumes zwischen dem Stauelement und dem Sieb bzw. der Tauchwand ist hierdurch sehr einfach möglich, indem das Stauelement beispielsweise komplett geöffnet wird und somit dieser Raum von Wasser durchströmt und Verunreinigungen, welche durch das Sieb gelangt sind, aus diesem Raum entfernt werden können. Selbstverständlich ist auch eine manuelle Reinigung dieses Bereiches möglich. Auch diese Art der Reinigung ist einfacher durchzuführen, wenn in der Reinigungsstellung des Stauelementes kein schlecht zugänglicher Bereich vorhanden ist.

Vorteilhafterweise ist dem Stauelement eine Hydraulikeinrichtung zur Bewegung des Stauelementes zugeordnet. Die Hydraulikeinrichtung ermöglicht je nach Bauweise des Stauelementes ein Anheben, Absenken und/oder Drehen des Stauelementes um eine Achse. Alternativ kann auch eine Triebstockkonstruktion oder ein Spindelantrieb zur Bewegung des Stauelementes vorgesehen sein. Je nach Anwendungsfall kann auch eine derartige Konstruktion vorteilhaft sein.

Ist in der Zwischenwand eine Öffnung zur Aufnahme des Stauelementes angeordnet, so kann das Stauelement vorteilhafterweise in der Zwischenwand versenkt werden. Das Stauelement und ggf. die Ansteuerungsmechanik für das Stauelement können hier geschützt aufbewahrt werden.

Ist das Stauelement in Teilflächen unterteilt, so kann eine dosiertere Öffnung und Schließung des Wehrs erfolgen, indem nur einzelne der Teilflächen bewegt werden.

In einem erfindungsgemäßen Verfahren zum Betätigen eines Stauelementes einer Abwasseranlage zwischen einer Zuführseite für verunreinigtes Wasser und einer Abflussseite für gereinigtes Wasser wird die wirksame Höhe des Stauelementes in Abhängigkeit der Menge des anfallenden Wassers gesteuert. Zu Wartungszwecken und/oder Reinigungszwecken, insbesondere nach großen Regenereignissen, wird das Stauelement in eine Reinigungsstellung bewegt. Hierdurch wird der zuflussseitige Raum des Stauelementes von Verunreinigungen, welche durch das Stauelement aufgestaut wurden oder vor dem Stauelement abgesunken sind, ausgeschwemmt oder können im wasserlosen Zustand leicht zugänglich entfernt werden.

Für die Reinigungsstellung wird das Stauelement vorzugsweise angehoben. Hierdurch wird der Raum, in welchem sich Sinkstoffe vor dem Stauelement abgelagert haben, durchspült. Die Sinkstoffe werden hierdurch entfernt.

Wird das Stauelement vorteilhafterweise im wesentlichen vollständig abgesenkt, so werden nicht nur die Sinkstoffe, sondern auch vor dem Stauelement aufgestaute Schwimmstoffe ausgeschwemmt und führen so zu einer Reinigung des Raumes vor dem Stauelement.

Weitere Vorteile der Erfindung werden in den nachfolgenden Ausführungsbeispielen beschrieben. Es zeigt
- **Figur 1**: einen Ausschnitt einer Abwasseranlage im Querschnitt mit einem beweglichen Stauelement,
- **Figur 2**: eine Abwasseranlage gemäß Figur 1 mit einem seitlich angeordneten Stauelement,
- **Figur 3**: eine Abwasseranlage gemäß Figur 1 mit einem an einer Siebanlage angeordneten Stauelement,
- **Figur 4 und 5**: eine Abwasseranlage gemäß Figur 1 mit einem verschieblich angeordneten Stauelement und
- **Figur 6 und 7**: eine Abwasseranlage gemäß Figur 1 mit einem an der Siebanlage angeordneten verschieblichen Stauelement.

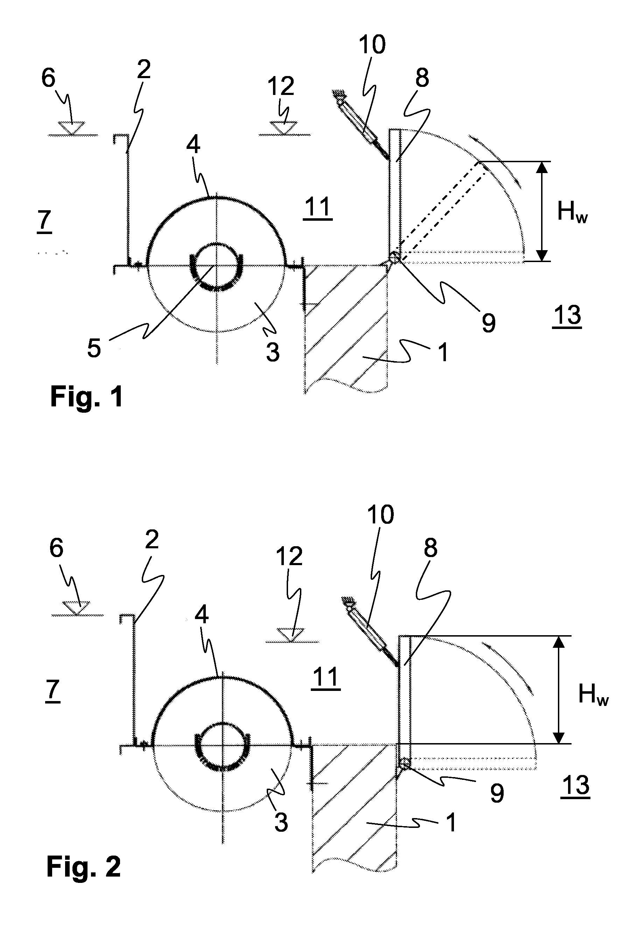

Figur 1 zeigt einen Querschnitt einer Abwasseranlage im Bereich einer Zwischenwand 1 und einer Tauchwand 2. Zwischen der Zwischenwand 1 und der Tauchwand 2 ist eine Siebanlage mit einer Schneckenwendel 3 und einem Sieb 4 angeordnet. Die Zwischenwand 1 endet etwa in der Höhe einer Achse 5 der Schneckenwendel 3. Die Tauchwand 2 erstreckt sich etwa von der Höhe der Achse 5 der Schneckenwendel 3 bis zur Höhe des maximal zulässigen Wasserspiegels 6 der Zuflußseite 7. Das Sieb 4 reicht im wesentlichen von der Zwischenwand 1 bis zur Tauchwand 2 und umgibt die obere Hälfte der Schneckenwendel 3.

Auf der Zwischenwand 1 ist ein Stauelement 8 angeordnet. Das Stauelement 8 ist an seinem der Zwischenwand 1 zugewandten Ende in einer horizontal angeordneten Achse 9 gelagert. An dem der Zwischenwand 1 abgewandten Ende des Stauelements 8 ist ein Hydraulikzylinder 10 angeordnet. Durch eine Betätigung des Hydraulikzylinders 10 ist das Stauelement 8 aus der dargestellten vertikalen Position in eine gestrichelt dargestellte horizontale Position oder jede dazwischen liegende Position drehbar. Es wird hierdurch ein Stauraum 11 gebildet, welcher von der Oberkante des Stauelements 8 abhängig ist. In der dargestellten vertikalen Position wird das Wasser in dem Stauraum 11 bis zu einem Wasserspiegel 12 aufstaubar sein, da die wirksame Staufläche des Stauelements bis zu einer vertikalen Höhe und damit der tatsächlichen Höhe des Stauelements 8 entspricht. Ist das Stauelement in einer gedrehten Position, so ist die wirksame Staufläche geringer und der Wasserspiegel 12 des Stauraums dementsprechend niedriger. Es wird hierdurch mehr Wasser aus dem Stauraum 11 und damit aus der Zuflussseite 7 in eine Abflussseite 13 strömen. In einer geneigten Position des Stauelements 8, wie sie beispielsweise durch die strich-punktierte Darstellung des Stauelements 8 gezeigt ist, weist das Stauelement 8 eine gegenüber der vertikalen Position verringerte wirksame Staufläche auf, welche durch die vertikale Höhe H_{w} bestimmt ist.

Das Wasser strömt von der Zuflussseite 7 durch die Schneckenwendel 3 und das Sieb 4 in den Stauraum 11. Das Sieb 4 reinigt hierbei das Abwasser von Teilen, welche von dem Abwasser mitgeführt werden. Durch eine Drehung der Schneckenwendel 3 werden diese Teile an das Ende der Schneckenwendel 3 befördert und können dort entnommen werden. Materialien, welche nicht von dem Sieb 4 zurückgehalten werden können, gelangen in den Stauraum 11. Insbesondere Sinkstoffe, welche sich in dem Wasser des Stauraums 11 befinden, werden sich auf der Zwischenwand 11 und vor dem Stauelement 8 ablagern. Bei großen Regenereignissen kann dies in größerem Umfang stattfinden. Erfindungsgemäß wird daher das Stauelement 8 zu Reinigungs- aber auch zu Wartungszwecken in eine mindestens horizontale Lage verdreht, wodurch Wasser, welches aus der Zuflussseite 7 zur Abflussseite 13 strömt, die auf der Zwischenwand 1 abgelagerten Sinkstoffe mitreißt und damit den Stauraum 11 reinigt. Wird diese Reinigungsstellung des Stauelements 8 in vorbestimmten Abständen eingenommen, so wird eine Reinigung des Stauraums 11 weitgehend selbsttätig ohne manuellen Eingriff möglich sein. Verunreinigungen, welche sich dennoch in dem Stauraum 11 ablagern, können aufgrund der Beweglichkeit des Stauelements 8 und der damit verbundenen guten Zugänglichkeit zusätzlich leicht manuell gereinigt werden.

Figur 2 zeigt eine ähnliche Anordnung des Stauelements 8 an der Zwischenwand 1 wie Figur 1. Während bei Figur 1 die Achse 9 an der Oberseite der Zwischenwand 1 befestigt ist, befindet sie sich in dem Ausführungsbeispiel der Figur 2 auf der abflußseitigen Seite der Zwischenwand 1. Durch die Anordnung der Achse 9 unterhalb der Oberseite der Zwischenwand 1 kann das Stauelement 8 insbesondere zum Einnehmen der Reinigungsstellung so abgesenkt werden, daß die Oberseite der Zwischenwand 1 vollständig von dem abströmenden Wasser gereinigt werden kann.

Das Stauelement 8 bildet auch bei dem Ausführungsbeispiel der Figur 2 eine Verlängerung der Zwischenwand 1 bis über das Sieb 4 hinaus. Hierdurch wird das Sieb 4 beim Durchtritt des Wassers von der Zuflussseite 7 zum Stauraum 11 und der Abflussseite 13 vollständig durchspült und verhindert dabei, daß sich Verunreinigungen des Wassers der Abflussseite 13 nur an einzelnen Stellen des Siebes 4 ansammeln und gegebenenfalls sogar zu einer Verstopfung des Siebes 4 führen würden.

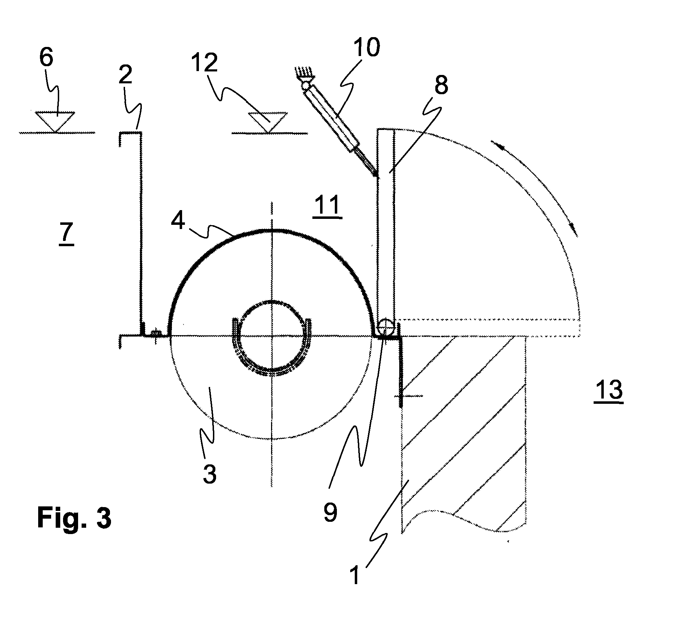

Ein weiteres Ausführungsbeispiel der Anordnung des Stauelements 8 zeigt die Figur 3. Bei dieser Ausführung ist das Stauelement 8 an dem Sieb 4 befestigt. Es kann hierdurch beispielsweise eine Vormontage des Stauelements 8 an dem Gehäuse des Siebs 4 erfolgen. Die nahezu fertige Baueinheit kann anschließend vor Ort an die Zwischenwand 1 montiert werden. Diese Vorgehensweise reduziert den Aufwand an der Baustelle und senkt somit die Montagekosten.

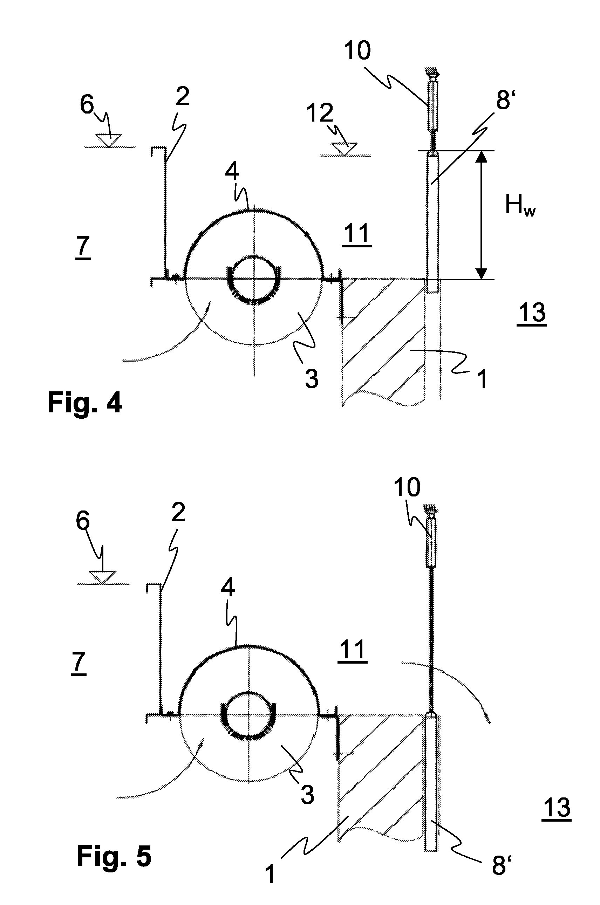

Eine andere Ausführung des Stauelements ist in Figur 4 dargestellt. Das Stauelement 8' ist hierbei nicht drehbar an der Zwischenwand 1 angeordnet, sondern es ist vertikal verschiebbar auf der Abflussseite 13 angeordnet. Das Stauelement 8' kann dabei zum Verändern der wirksamen Staufläche mit dem Hydraulikzylinder 10 abgesenkt werden. Die Oberkante des Stauelements 8' wird dabei in Richtung auf die Oberseite der Zwischenwand 1 bewegt, wodurch die wirksame Höhe H_{w} reduziert wird. Das Wasser aus dem Stauraum 10 strömt sodann über die Oberkante des Stauelements 8' zur Abflussseite 13.

Figur 5 zeigt das Ausführungsbeispiel aus Figur 4, wobei sich das Stauelement 8' in der Reinigungsstellung befindet. Die Oberkante des Stauelements 8' befindet sich dabei in Höhe der Oberkante der Zwischenwand 1. Die wirksame Höhe H_{w} des Stauelements 8' beträgt in diesem Zustand 0. Das Wasser, welches in der dargestellten Pfeilrichtung von der Zuflussseite 7 durch die Schneckenwendel 3 und das Sieb 4 strömt, tritt ohne Rückstauwirkung sofort in den Bereich der Abflussseite 13 ein. Sinkstoffe, welche sich in dem Stauraum 10 abgelagert haben, werden in dieser Reinigungsstellung des Stauelements 8' in die Abflussseite 13 geschwemmt.

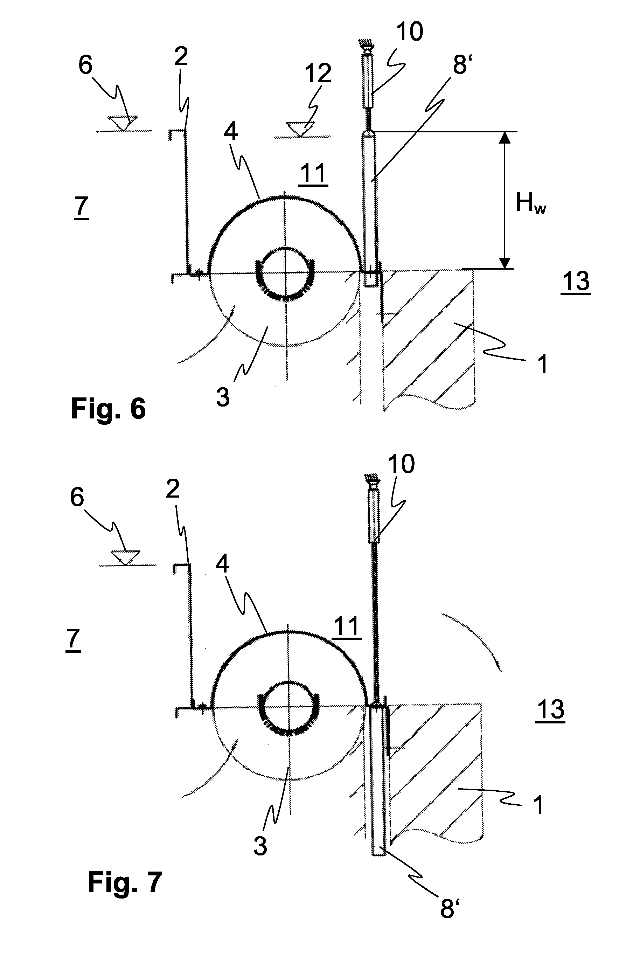

Die Figuren 6 und 7 zeigen im wesentlichen das gleiche Ausführungsbeispiel wie Figuren 4 und 5. Unterschiedlich ist hierbei, dass das Stauelement 8' auf der Zuflussseite 7 versenkbar ist. Es kann hierbei ähnlich wie bei dem Ausführungsbeispiel der Figur 3 das Stauelement 8' an dem an dem Sieb 4 bzw. dem Gehäuse der Siebanlage befestigt sein. Eine Vormontage des Stauelements 8' zusammen mit der Schneckenwendel 3 und dem Sieb 4 kann hierbei durchgeführt werden.

Die Tauchwand 2 ist ebenfalls an dem Gehäuse der Siebanlage, insbesondere an dem Sieb 4 befestigt. Sie kann wie in den dargestellten Ausführungsbeispielen aus Blech gefertigt sein. Selbstverständlich kann sie auch betoniert sein und damit die Leitfunktion zum Führen des Wassers von der Zuflussseite 7 durch die Siebanlage in den Stauraum 10 und damit zur Abflussseite 13 hin bewirken.

Die vorliegende Erfindung ist nicht auf die Ausführungsbeispiele beschränkt. Insbesondere sind das Stauelement 8' nicht nur in die abgesenkte, sondern auch in eine angehobene Stellung verbringbar. Hierdurch wird der Zufluß nicht über die Oberkante des Stauelements 8' sondern über deren Unterkante erfolgen. Es entsteht hierbei ein Spalt zwischen der Oberseite der Zwischenwand 1 und der Unterseite des Stauelements 8', durch welchen das Wasser in die Abflussseite 13 strömen kann. Die wirksame Höhe des Stauelements 8' liegt dann zwischen dem Wasserspiegel 12 des Stauraums 11 und der Unterkante des Stauelements 8'.

Außerdem sind Drehbewegungen des Stauelements 8 nicht nur über eine horizontale Achse 9, sondern auch über nicht dargestellte vertikale Achsen möglich. Das Stauelement 8 wird dabei um die vertikale Achse verdreht und öffnet an zwei Stellen einen Spalt, durch welchen das Wasser aus dem Stauraum 11 in die Abflussseite 13 fließen kann.

## Patentansprüche

1. Abwasseranlage mit einer Zuflussseite (7) für verunreinigtes Wasser und einer Abflussseite (8) für gereinigtes Wasser, mit einer Tauchwand (2) auf der Zuflussseite (7) und einer Zwischenwand (1) zur Abtrennung der Zuflussseite (7) von der Abflussseite (8), wobei zwischen der Tauchwand (2) und der Zwischenwand (1) eine Siebanlage mit einer Schneckenwendel (3) und einem die Schneckenwendel (3) teilweise umgebenden Sieb (4) angeordnet ist, **dadurch gekennzeichnet, dass** in Verlängerung der Zwischenwand (1) ein Stauelement (8) angeordnet ist, dessen wirksame Staufläche veränderbar ausgebildet ist und das zumindest in seiner größten Erstreckung bis über die Schneckenwendel (3) und das Sieb (4) hinausragt.

2. Anlage nach dem vorherigen Anspruch, **dadurch gekennzeichnet, dass** die wirksame Staufläche in ihrer Höhe (H_{w}) veränderbar ausgebildet ist

3. Anlage nach einem oder mehreren der vorherigen Ansprüche, **dadurch gekennzeichnet, dass** zur Verringerung der wirksamen Staufläche das Stauelement (8) anhebbar ist.

4. Anlage nach einem oder mehreren der vorherigen Ansprüche, **dadurch gekennzeichnet, dass** zur Verringerung der wirksamen Staufläche das Stauelement (8) absenkbar ist.

5. Anlage nach einem oder mehreren der vorherigen Ansprüche, **dadurch gekennzeichnet, dass** das Stauelement (8) um eine horizontale oder vertikale Achse (9) schwenkbar gelagert ist.

6. Anlage nach einem oder mehreren der vorherigen Ansprüche, **dadurch gekennzeichnet, dass** das Stauelement (8) vertikal verschieblich gelagert ist.

7. Anlage nach einem oder mehreren der vorherigen Ansprüche, **dadurch gekennzeichnet, dass** das Stauelement (8) an der Zwischenwand (1) angeordnet ist.

8. Anlage nach einem oder mehreren der vorherigen Ansprüche, **dadurch gekennzeichnet, dass** das Stauelement (8) an einem Gehäuse der Siebanlage angeordnet ist.

9. Anlage nach einem oder mehreren der vorherigen Ansprüche, **dadurch gekennzeichnet, dass** die Tauchwand (2) an dem Gehäuse der Siebanlage angeordnet ist.

10. Anlage nach einem oder mehreren der vorherigen Ansprüche, **dadurch gekennzeichnet, dass** das Sieb (4) die Schneckenwendel (3) im wesentlichen in ihrer oberen Hälfte umgibt.

11. Anlage nach einem oder mehreren der vorherigen Ansprüche, **dadurch gekennzeichnet, dass** die Zwischenwand (1) bis im wesentlichen der Höhe der Achse (5) der Schneckenwendel (3) reicht.

12. Anlage nach einem oder mehreren der vorherigen Ansprüche, **dadurch gekennzeichnet, dass** dem Stauelement (8) eine Hydraulikeinrichtung (10), eine Triebstockkonstruktion oder ein Spindelantrieb zur Bewegung des Stauelementes (8) zugeordnet ist.

13. Anlage nach einem oder mehreren der vorherigen Ansprüche, **dadurch gekennzeichnet, dass** in der Zwischenwand (1) eine Öffnung zur Aufnahme des Stauelementes (8) angeordnet ist.

14. Anlage nach einem oder mehreren der vorherigen Ansprüche, **dadurch gekennzeichnet, dass** das Stauelement (8) in Teilflächen unterteilt ist

15. Verfahren zum Betätigen eines Stauelementes (8) einer Abwasseranlage zwischen einer Zuflussseite (7) für verunreinigtes Wasser und einer Abflussseite (8) für gereinigtes Wasser, wobei die wirksame Höhe (H_{w}) des Stauelementes (8) in Abhängigkeit der Menge des anfallenden Wassers gesteuert wird, **dadurch gekennzeichnet, dass** das Stauelement (8) zu Wartungszwecken und/oder Reinigungszwecken, insbesondere nach grossen Regenereignissen in eine Reinigungsstellung bewegt wird.

16. Verfahren nach dem vorherigen Anspruch, **dadurch gekennzeichnet, dass** das Stauelement (8) angehoben wird.

17. Verfahren nach einem oder mehreren der vorherigen Ansprüche, **dadurch gekennzeichnet, dass** das Stauelement (8) im wesentlichen vollständig abgesenkt wird.
